# FASCICULE DE BREVET EUROPEEN

(11) **EP 0 868 047 B1**
(45) Date de publication et mention de la délivrance du brevet: **04.01.2006**
(21) Numéro de dépôt: 98400650.2
(22) Date de dépôt: 19.03.1998
(51) Int. Cl.: H04L 12/28

(54) **Procédé et dispositif de gestion des protocoles d'échange dans un réseau domotique**
Verfahren und Vorrichtung zur Datenaustauschprotokollverwaltung in einem Hausnetzwerk
Method and device for managing exchange protocols in a home network

(30) Priorité: 28.03.1997 FR 9703821
(43) Date de publication de la demande: 30.09.1998
(73) Titulaire: Trialog, 75008 Paris (FR)
(72) Inventeur: Kung, Antonio, 75015 Paris (FR); Sauvage, Sylvain, 75011 Paris (FR); Milanini, Stéphane, 75004 Paris (FR)
(74) Mandataire: Kohn, Philippe

(56) Documents cités:
- EP-A- 0 570 293
- WO-A-90/15394
- US-A- 4 623 999
- GUILLEMIN P: "DAS EHS-PROTOKOLL" ELEKTRONIK, vol. 45, no. 17, 20 août 1996, pages 48-53, XP000633203
- BERTSCH L A: "DEVELOPMENT TOOLS FOR HOME AUTOMATION" IEEE TRANSACTIONS ON CONSUMER ELECTRONICS, vol. 36, no. 4, 1 novembre 1990, pages 854-858, XP000178990
- RAMABADRAN T V ET AL: "A TUTORIAL ON CRC COMPUTATIONS" IEEE MICRO, vol. 8, no. 4, août 1988, pages 62-75, XP000652055
- SARWATE D V: "COMPUTATION OF CYCLIC REDUNDANCY CHECKS VIA TABLE LOOK-UP" COMMUNICATIONS OF THE ASSOCIATION FOR COMPUTING MACHINERY, NEW YORK, NY, US, vol. 31, no. 8, août 1988, pages 1008-1013, XP000003858
- BABICH F: "HOME NETWORK REQUIREMENTS. THE ESPRIT HS PROPOSAL" EUROPEAN TRANSACTIONS ON TELECOMMUNICATIONS AND RELATED TECHNOLOGIES, vol. 5, no. 1, 1 janvier 1994, pages 93-106, XP000445720

## Description

La présente invention concerne la domotique et plus particulièrement la gestion des protocoles d'échange dans un dispositif électronique entre un appareil électrique alimenté par un réseau d'énergie électrique et un système de communication par courant porteur sur le réseau d'énergie électrique.

Les réseaux domotiques utilisent une liaison par courant porteur sur les lignes d'alimentation électrique et on prévoit pour chaque appareil relié au réseau un dispositif électronique de communication, généralement intégré dans l'appareil, qui est relié à la ligne d'alimentation électrique et qui régit les échanges entre le réseau par courant porteur et les appareils de l'utilisateur.

L'article "Das EHS-Protokoll" par Pierre Guillemin publié dans "Elektronik, Vol. 45, No.17" en 1996" représente l'état de la technique antérieure. Il décrit un procédé de gestion des protocoles d'échange dans un dispositif électronique de communication entre un appareil éléctrique et un système de communication. Le procédé est effectué par un microcontrôleur avec du logiciel spécifique pour la gestion des protocoles, mais qui manque les fonctions comme contrôle de redondance cyclique (CRC) et/ou autocorrection des erreur (FEC).

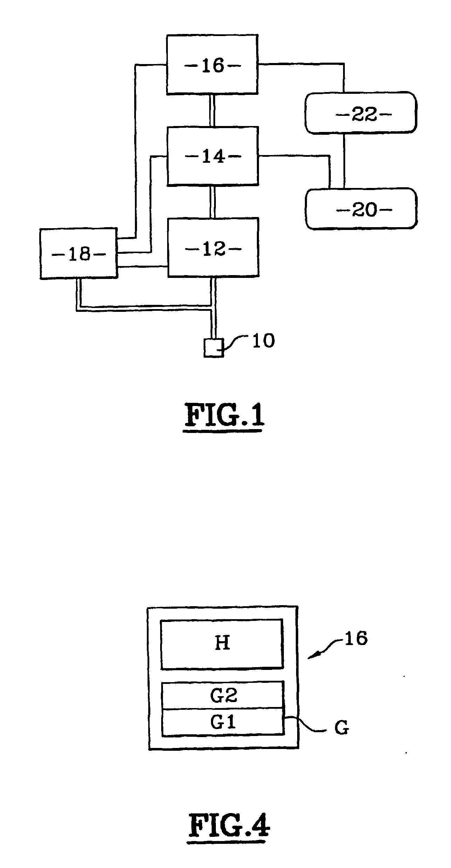

Un tel dispositif électronique est représenté schématiquement sur la figure 1. Il est relié par une prise 10 au réseau d'alimentation électrique et il comporte successivement un circuit d'interface de ligne 12, un modem 14 et un microcontrôleur 16 qui sont alimentés par un circuit d'alimentation commun 18. Le modem 14 est piloté par une horloge 20 qui est aussi utilisée pour piloter le microcontrôleur 16.

Le circuit d'interface de ligne effectue le filtrage de la tension du réseau pour en extraire des signaux analogiques de fréquence qui sont gérés par le modem pour réaliser une modulation, une démodulation et une détection de porteuse. Ce modem effectue une gestion pour chaque bit reçu ou transmis à un débit de 2400 bits par seconde conformément à la procédure normalisée pour le réseau domotique européen "EHS" qui est décrit en particulier dans l'ouvrage "La domotique appliquée" de messieurs, A. Kung, B. Jean-Bart, O. Marbach et S. Sauvage publié par International Thomson Publishing France (ISBN 2-84180-055-5).

La transmission des commandes par le réseau consiste à envoyer des triplets "objet-service-données". Dans le cas oùl'appareil commandé est un capteur de température, par exemple, les trois éléments du triplet sont "température-écriture-valeur"

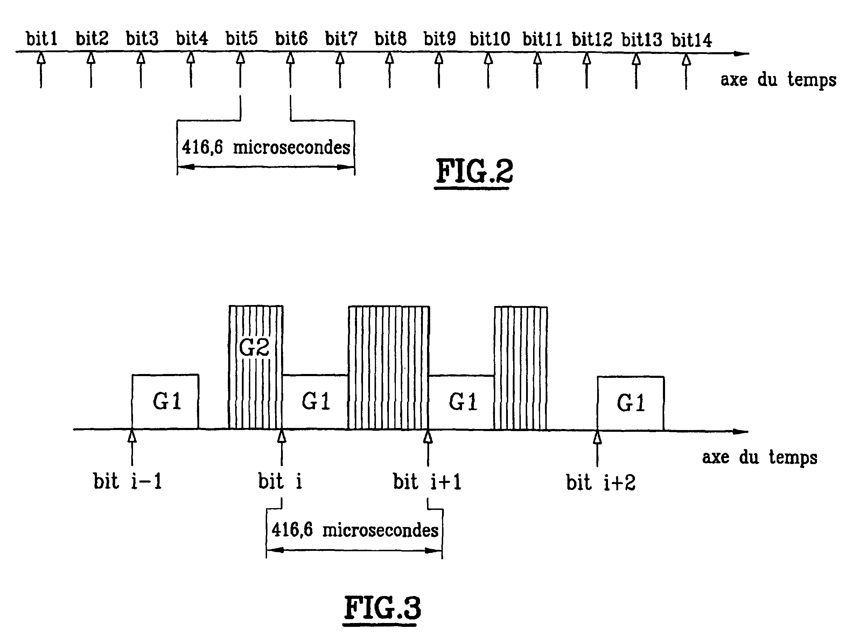

Le microcontrôleur interagit avec le modem pour chaque bit transmis ou reçu à un rythme correspondant au débit du protocole, c'est-à-dire une période de 416,7 microsecondes comme cela est illustré sur la figure 2. Il comprend une partie logicielle libre réservée à l'application de l'appareil et qui est généralement élaborée par le fabricant de l'appareil.

Conformément à la procédure normalisée pour le réseau domotique européen EHS, on réalise, dans le logiciel de traitement des interruptions engendrées par la réception ou l'émission d'un bit, un contrôle de redondance cyclique (CRC) et une autocorrection des erreurs (FEC) sur les informations numériques transmises.

L'autocorrection des erreurs FEC est une fonctionnalité de correction automatique sur les informations numériques transmises qui utilise le polynôme de correction (x⁶ + x⁵ + x⁴ + x³ +1) qui permet, en encodant un octet de 8 bits sur 14 bits, de corriger jusqu'à trois bits successifs erronés. Selon la spécification du réseau domotique européen EHS, il faut transmettre en fait le complément à 1 du signal d'autocorrection FEC. Si, par exemple, le FEC de 0 est 000000, le complément est 111111.

Le contrôle de redondance cyclique CRC est une fonctionnalité de détection d'erreurs de transmission qui utilise le polynôme (x¹⁶ + x¹⁵ + x² + 1). Dans ce cas, le contrôle de redondance cyclique se traduit par un champ complémentaire de 16 bits qui accompagne la transmission d'une trame sur le réseau. Le contrôle de redondance cyclique CRC est une fonction du reste de la trame après la division par le polynôme générateur ; il se calcule de manière incrémentale pour chaque octet transmis.

Ces deux calculs de l'autocorrection des erreurs et du contrôle de redondance cyclique sont généralement réalisés sous forme câblée en utilisant un circuit spécifique comportant par exemple huit couches de portes. Le coût d'un tel circuit spécifique est important parce qu'il nécessite en plus une logique de gestion des octets et il augmente notablement le prix du dispositif électronique de communication qui est fourni par le fabricant de l'appareil commandé.

Par ailleurs, il est souhaitable d'utiliser des microcontrôleurs de prix réduit pour réduire le coût du dispositif électronique de communication. Or, le prix des microcontrôleurs croît rapidement avec la taille de leurs mémoires. Par exemple, si on augmente la taille des mémoires morte et vive, on augmente également le nombre de connexions du circuit intégré et sa surface, ce qui entraîne une augmentation importante du prix.

Le prix des microcontrôleurs croît également en fonction de la cadence de fonctionnement. Par exemple, lorsque l'on passe à des cadences supérieures à 12 MHz, le prix du microcontrôleur augmente fortement.

Le fabricant de l'appareil doit, pour chaque appareil, élaborer la partie logicielle libre réservée à l'application à l'appareil considéré. Cette opération d'adaptation n'est pas aisée et elle grève aussi le coût du dispositif électronique de communication.

Le problème à la base de l'invention est de fournir un dispositif électronique de communication dont le coût global est réduit et qui est facile à réaliser pour le fabricant de l'appareil.

A cet effet, la présente invention a pour objet un procédé de gestion des protocoles d'échange dans un dispositif électronique de communication entre un appareil électrique alimenté par un réseau d'énergie électrique et un système de communication par courant porteur sur ledit réseau d'énergie électrique, ledit dispositif comportant un microcontrôleur, comprenant une partie logicielle libre (H) réservée à l'application à l'appareil, et un modem, procédé dans lequel on réalise, entre les interruptions engendrées par la réception ou l'émission d'un bit, un contrôle de redondance cyclique (CRC) et une autocorrection des erreurs (FEC) sur les informations numériques transmises, caractérisé en ce que l'on utilise un microcontrôleur de capacité mémoire réduite, dont la mémoire morte est inférieure ou égale à 8 kilo-octets, et de faible cadence de fonctionnement, en ce que le contrôle de redondance cyclique et l'autocorrection des erreurs sont réalisés sous la commande d'un logiciel de gestion des protocoles comportant une procédure d'interruptions et une procédure d'application, en ce que le calcul de l'autocorrection des erreurs en transmission et en réception est effectué en utilisant des tables de constantes dont la taille est toujours inférieure à 256 octets et en ce que le calcul du contrôle de redondance cyclique est réalisé à chaque octet reçu en utilisant des tables dont la taille est toujours inférieure à 256 octets.

Le fait d'effectuer le contrôle de redondance cyclique et l'autocorrection des erreurs sous la commande d'un logiciel permet d'éliminer un circuit câblé et de diminuer le prix de revient.

La procédure particulière du calcul du contrôle de redondance cyclique et de l'autocorrection des erreurs permet d'utiliser un microcontrôleur dont la taille mémoire est réduite.

Par ailleurs, le fait que la cadence de fonctionnement du microcontrôleur est faible permet de réduire son coût.

Selon un mode de réalisation de l'invention, le calcul de l'autocorrection des erreurs et le calcul du contrôle de redondance cyclique sont réalisés séparément, chacun dans une interruption différente.

Cela permet d'utiliser une cadence de fonctionnement plus réduite.

Selon encore une autre caractéristique de l'invention, la gestion du protocole de communications est réalisée au moyen d'un langage orienté objet.

Ceci permet de limiter les besoins en mémoire morte et présente l'avantage de la portabilité, c'est-à-dire que le code obtenu est plus stable et l'ajout d'un objet supplémentaire ne nécessite pas d'extension de ce code. De ce fait, les fabricants d'appareils peuvent se procurer un dispositif électronique de communication de type standard qui peut être facilement adapté à l'appareil considéré par modification d'une table sans modification du logiciel.

Selon encore une autre caractéristique de l'invention, la gestion du protocole de communications est réalisée par le logiciel de gestion des protocoles sans utiliser de tampons en traitant les données à la volée et en les signalant au logiciel de l'application.

Cette disposition permet de limiter les besoins en mémoire vive du microcontrôleur et d'utiliser des trames de longueur quelconque.

Selon un mode de réalisation de l'invention, cette signalisation est réalisée par appel direct d'une procédure de l'application par la procédure de communication pendant une routine d'interruption.

Selon un autre mode de réalisation de l'invention, cette signalisation est réalisée par mise à jour, par la procédure de communication d'un drapeau qui sera exploité par la procédure d'application.

Selon encore une autre caractéristique de l'invention, le microcontrôleur travaille à une cadence faible.

Ceci permet de réduire le coût du microcontrôleur et, également, de simplifier le circuit d'alimentation du microcontrôleur, ce qui réduit encore le coût global du dispositif électronique de communication.

L'invention a aussi pour objet un microcontrôleur destiné à être intégré dans un dispositif électronique de communication entre un appareil électrique alimenté par un réseau d'énergie électrique et un système de communication par courant porteur sur le réseau d'énergie électrique, caractérisé en ce qu'il comprend une mémoire morte dans laquelle est stocké un logiciel de gestion des protocoles d'échange réalisant le procédé selon l'invention.

Avantageusement, le microcontrôleur est piloté par l'horloge du modem par l'intermédiaire d'un diviseur de fréquence.

Ceci permet d'utiliser un microcontrôleur travaillant à une cadence plus faible que le modem tout en utilisant l'horloge de ce dernier.

D'autres caractéristiques et avantages de l'invention apparaîtront à la lecture de la description détaillée qui suit pour la compréhension de laquelle on se reportera aux dessins annexés dans lesquels :
- la figure 1 représente schématiquement un dispositif électronique de communication selon l'invention ;
- la figure .2 est un chronogramme illustrant le débit de la transmission par le modem ;
- la figure 3 est un chronogramme de la gestion des protocoles ; et
- la figure 4 représente schématiquement le microcontrôleur.

Le microcontrôleur 16 du dispositif électronique de communication représenté sur la figure 1 est un microcontrôleur de taille mémoire réduite et travaillant à une cadence faible. Il peut, par exemple, être constitué par un microcontrôleur de type 8 bits comprenant 8 kilo-octets de mémoire morte et 128 octets de mémoire vive, tel que celui commercialisé sous la référence 8032 par la société INTEL.

Le modem 14 est, par exemple, le circuit commercialisé sous la référence ST7537 par la société SGS-Thomson. L'horloge du modem 20 est constituée par un oscillateur à quartz dont la fréquence est de 11,0592 MHz qui pilote également le microcontrôleur 16.

Comme on peut le voir sur la figure 1, on peut intercaler un diviseur de fréquence 22 entre l'horloge 20 et le microcontrôleur 16 de manière à faire travailler ce dernier à une cadence plus faible afin d'utiliser un microcontrôleur moins cher et de simplifier le circuit d'alimentation 18.

La figure 4 est une représentation schématique du microcontrôleur 16. Dans sa mémoire morte sont enregistrés deux éléments logiciels, une partie logicielle libre H qui est réservée à l'application, c'est-à-dire à l'appareil concerné - par exemple un détecteur de température - et une partie logicielle G fournissant les fonctionnalités de gestion des protocoles.

Conformément à l'invention, l'autocorrection des erreurs (FEC) et le contrôle de redondance cyclique (CRC) sont réalisés sous forme logicielle et non câblée par le logiciel de gestion des protocoles qui comporte deux procédures logicielles, G1 et G2.

Comme on peut le voir sur la figure 3, la procédure d'interruptions G1 est appelée lors des interruptions fournies par le modem 14 selon une période de 416,7 microsecondes correspondant au débit de la transmission par courant porteur (2400 bits par seconde).

La procédure d'application G2 est appelée par l'application (partie logicielle libre H) entre les interruptions correspondant aux bits i-1 et i. La procédure G2 est interrompue par les appels à la procédure G1 correspondant aux bits i et i+1.

Dans le dispositif selon l'invention, les calculs du contrôle de redondance cyclique et de l'autocorrection des erreurs sont effectués au niveau de la procédure G1. Ces fonctionnalités doivent être réalisées de manière cadencée, tous les 14 bits pour l'autocorrection des erreurs et pour toutes les trames pour le contrôle de redondance cyclique.

Le fait de ne pas exécuter ces fonctionnalités au niveau de la procédure logique G2 permet de relâcher les contraintes d'appel de la procédure G2. En particulier, il n'est pas nécessaire d'appeler la procédure G2 pour chaque bit.

Selon une variante, le calcul de l'autocorrection des erreurs et celui du contrôle de redondance cyclique ne sont pas réalisés pendant la même interruption.

La fonctionnalité de l'autocorrection des erreurs comporte deux phases. Pendant la transmission, on calcule les 6 bits supplémentaires pour chaque octet à partir du générateur polynomial x⁶ + x⁵ + x⁴ + x³ + 1. On met dans le champ de contrôle le complément à 2 de la valeur calculée afin qu'un octet de valeur 0 soit encodé par une valeur non nulle. Chaque octet est encodé par une valeur de 14 bits. Dans le cas où les quatorze bits reçus ne sont pas cohérents, on applique une procédure de correction. De cette manière, on peut corriger jusqu'à trois bits faux consécutifs.

Afin, d'une part, d'exécuter la fonction de FEC dans une routine d'interruption et, d'autre part, d'utiliser une configuration avec une taille maximale de 8 kilo-octets pour la mémoire morte, il est nécessaire de concilier les impératifs de taille et d'unité centrale.

Conformément à l'invention, le calcul de l'autocorrection des erreurs en transmission et en réception est en utilisant des tables dont la taille est limitée à 256 octets. Ceci peut être réalisé en effectuant des calculs simples dont la durée maximale est de 30 microsecondes, dans le cas d'un microcotrôleur de type 8051 travaillant à 11,05 MHz par exemple.

A la transmission, on peut utiliser plusieurs procédures.

Selon un premier mode de réalisation, (procédure P1), on effectue une division polynomiale. A la transmission, les 6 bits de l'autocorrection des erreurs sont calés à droite dans l'octet de résultat, ce qui se traduit de la manière suivante en langage de programmation C : 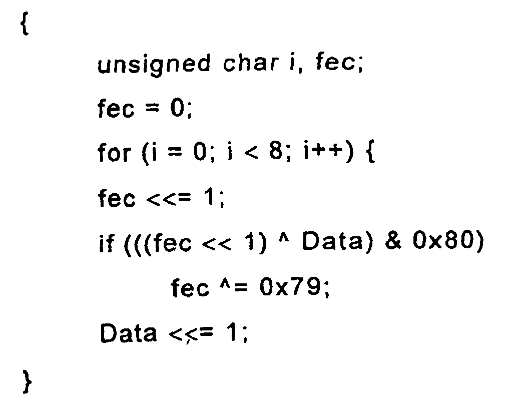 return (~fec) & 0x3f;

Selon un autre mode de réalisation (procédure P3), on réalise une procédure accédant à une table. En transmission, les 6 bits du FEC sont calés à droite dans l'octet de résultat, soit en langage C :
unsigned char cTable Fec256[256] ;
unsigned char ComputeFEC(unsigned char Data)

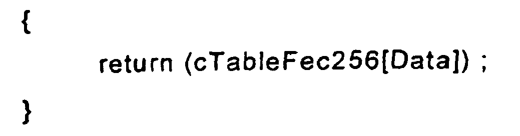

Selon encore un autre mode de réalisation (procédure P5), on utilise une table de 64 octets et une table de 4 octets encodant les chaînes d'autocorrection des erreurs de 0 à 63 et les chaînes d'autocorrection des erreurs de xx000000 où xx varie de 0 à 3 et on calcule les chaînes d'autocorrection des erreurs en deux parties.

A la transmission, ceci s'écrit de ia manière suivante en langage C :

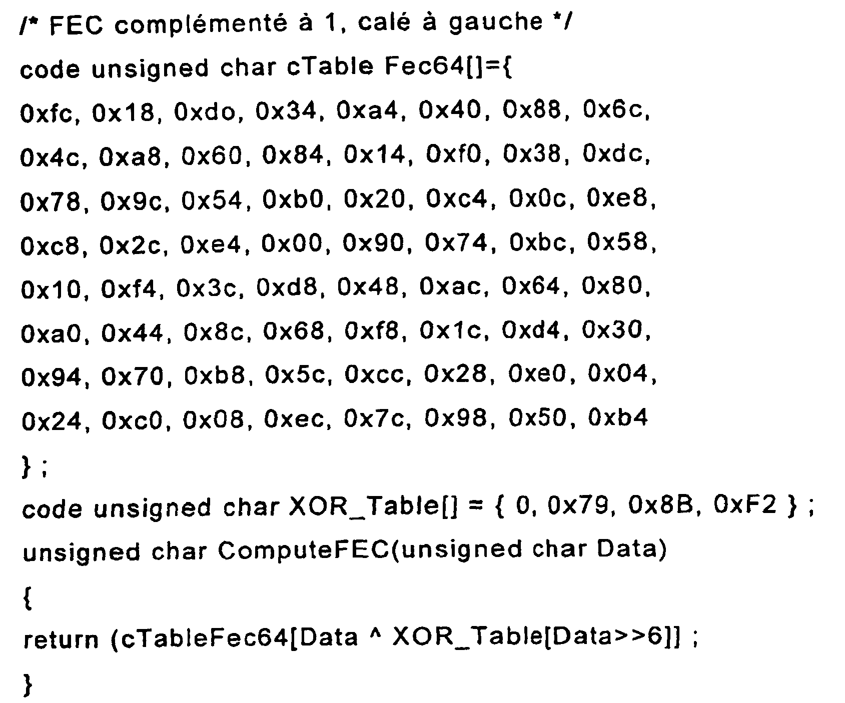

Selon encore un autre mode de réalisation (procédure P7), on utilise deux tables de 16 octets encodant les chaînes d'autocorrection des erreurs de 0 à 15 puis de xxxx0000 où x varie de 0 à 15 et on calcule les chaînes d'autocorrection des erreurs en deux parties.

Ceci se traduit à la transmission par :

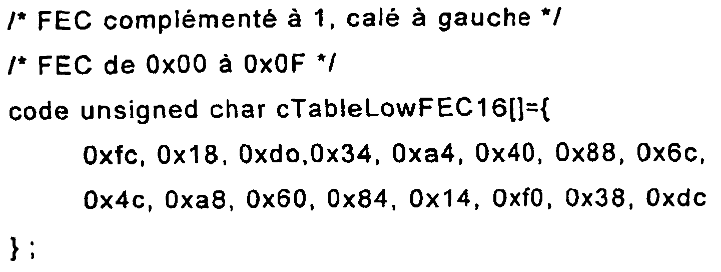

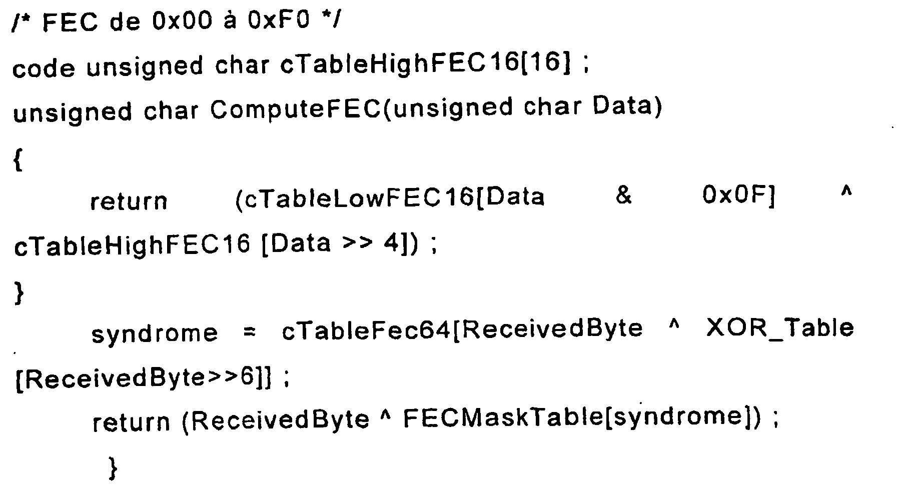

A la réception, on peut utiliser différentes procédures. Selon un premier mode de réalisation (procédure P2)on effectue une itération par bit reçu, au lieu d'attendre la réception des 14 bits, soit, en langage C :

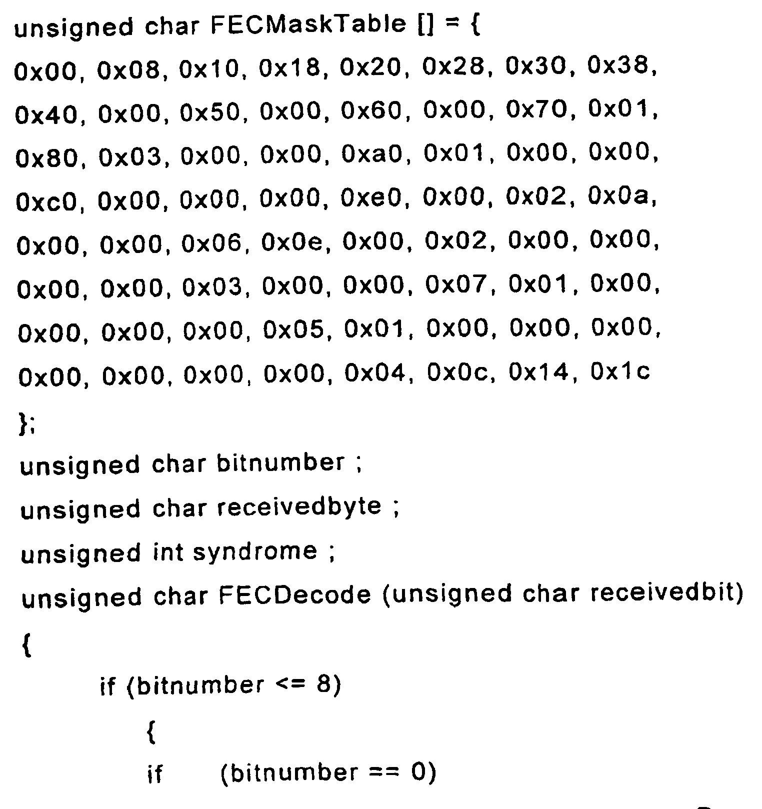

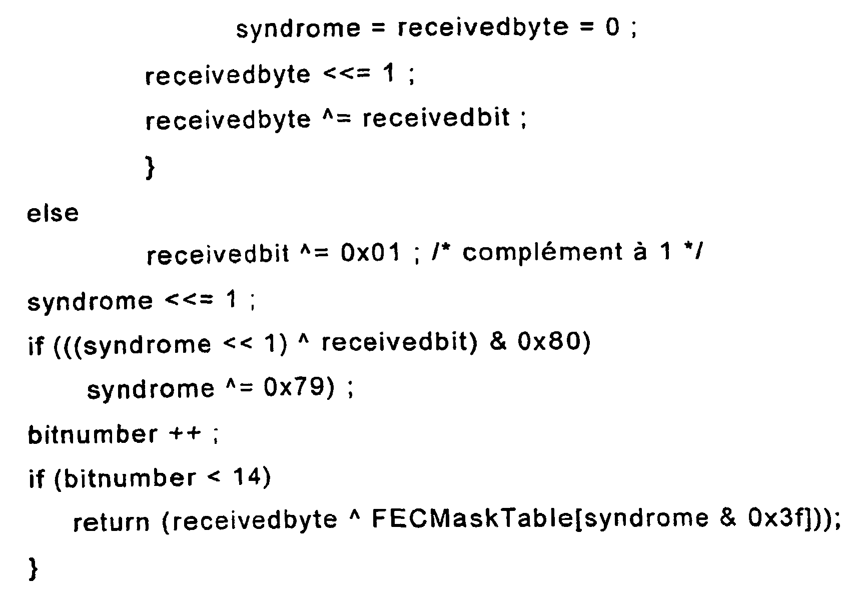

En réception, selon un autre mode de réalisation (procédure P4), on ne calcule que les syndromes des valeurs xxxxxxxx000000, ce qui donne une table de 256 octets, soit en langage C :
/* les 6 bits sont calés à droite dans l'octet de résultat */unsigned char cTableSyndrome[256] ;
/* ReceivedByte et Received FEC contiennent les 8 bits de données et les 6 bits de FEC calés à droite */ unsigned char FECDecode(unsigned char ReceivedByte, ReceivedFEC)

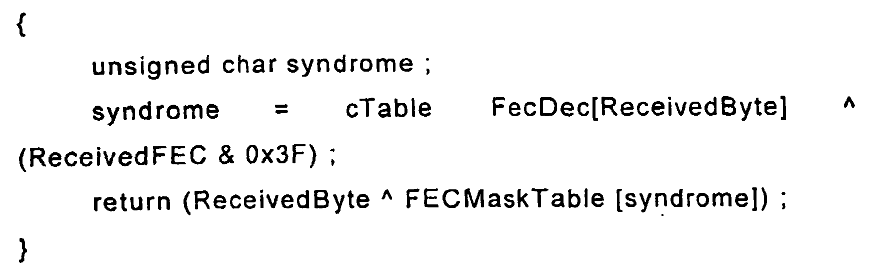

A la réception, selon encore un autre mode de réalisation (procédure P6), on obtient, en langage C :
/* ReceivedByte et ReceivedFEC contiennent les 8 bits de données et les 6 bits de FEC calés à droite */
unsigned char FECDecode(unsigned char ReceivedByte, ReceivedFEC)

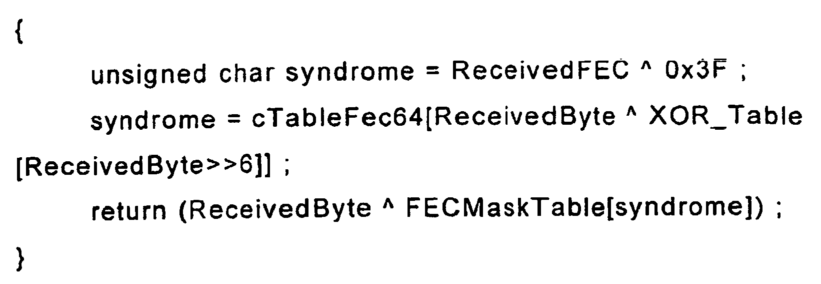

A la réception, selon encore un autre mode réalisation (procédure P8), on obtient :
/* ReceivedByte et ReceivedFEC contiennent les 8 bits de données et les 6 bits de FEC calés à droite */
unsigned char FECDecode(unsigned char ReceivedByte, ReceivedFEC)

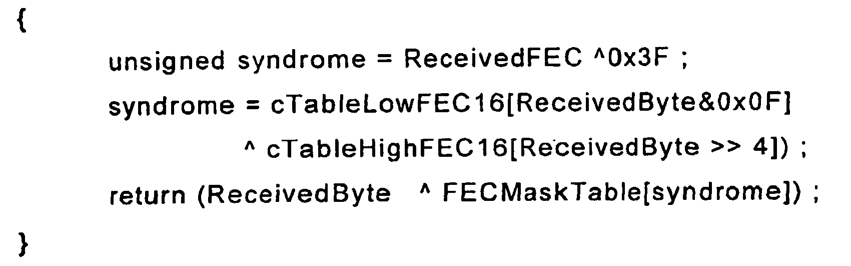

On combine à chaque fois une procédure de transmission et une procédure de réception parmi les procédures décrites ci-dessus. De préférence, pour obtenir un bon compromis entre la taille de la mémoire et le temps d'unité centrale, on utilise les combinaisons des procédures P1 et P2, P3 et P4, P5 et P6 et P7 et P8.

Ces différentes procédures nécessitent respectivement 256, 68 et 32 octets de données et en temps d'unité centrale, aucune procédure ne nécessite plus de 30 microsecondes pour le microcontrôleur référencé 8051 de la société INTEL à une fréquence de 11,0592 MHz.

Le calcul du contrôle de redondance cyclique peut être réalisé de plusieurs manières toujours pour concilier les impératifs de taille mémoire et de temps d'unité centrale. Le contrôle de redondance cyclique d'une trame est le reste de la division polynomiale de la trame par le polynôme générateur x¹⁶+x¹⁵+x²+1

Ce calcul du contrôle de redondance cyclique peut être effectué à chaque octet reçu en utilisant une table de 256 octets qui contient les huit monômes de poids faibles du nouveau contrôle de redondance cyclique ceci se traduit en langage C de la manière suivante :
code unsigned int Table3[256] ;
unsigned char ReceivedByte3 ;
unsigned int CRC3 ;
void ComputeCRC(void)

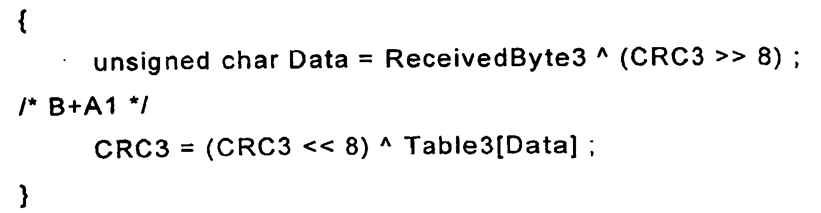

Selon un autre mode de réalisation, le calcul du contrôle de redondance cyclique est effectué à chaque octet reçu en utilisant la parité, comme indiqué ci-après en langage C :
code unsigned char Vparity2[16] ;
char Parity (unsigned char Data) 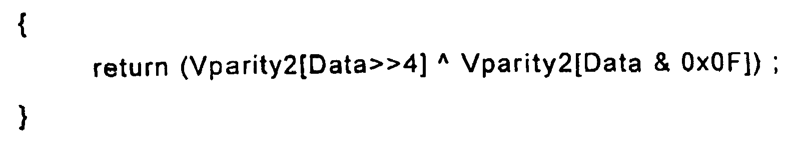
unsigned char ReceivedByte2 ;
unsigned int CRC2 ;
void Compute CRC(void)

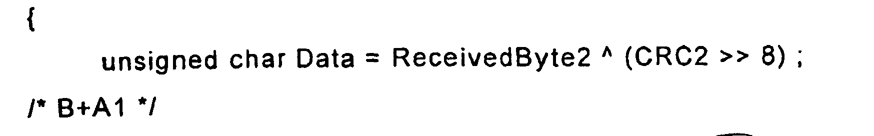

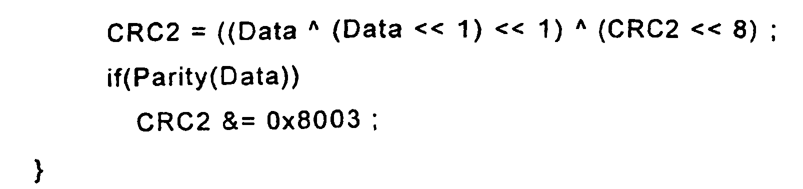

Selon encore un autre mode de réalisation, le calcul du contrôle de redondance cyclique est effectué à chaque bit reçu, en réalisant un traitement bit à bit avec un octet de retard. L'opération à effectuer dépend seulement du monôme ou bit entrant, si le nouveau bit vaut 0, on ne fait rien et s'il vaut 1, on soustrait le polynôme générateur et la représentation binaire est ox8005 comme indiqué ci-après en langage C :
unsigned char ReceivedBit ;
unsigned int CRC4 ;
void ComputeCRC(unsigned char newbit)

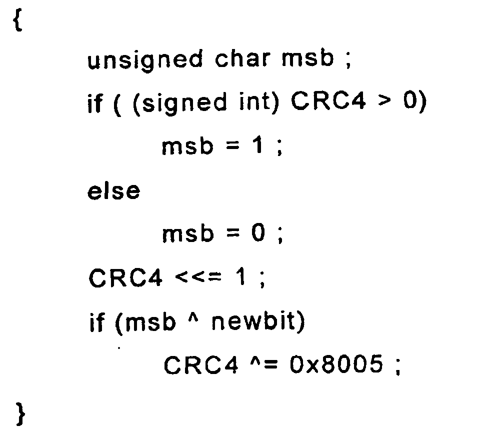

Les spécifications du réseau européen EHS modélisent la communication entre les applications par la notion de langage de commande qui exprime des demandes de service appliquées à des objets, par exemple application du service "lecture" sur l'objet "température".

Les logiciels G et H doivent faire le tri au niveau des sous-unités et des objets. Le logiciel généralement utilisé à cet effet génère des besoins considérables en emplacement de mémoire morte. Pour éviter cet inconvénient, conformément à l'invention, on utilise un langage orienté objet. On déclare une liste des procédures de traitement de service et on remplace les procédures "traiter message " et "traiter sous-unité par une table en mémoire morte, ce qui permet un gain important en taille de la mémoire morte.

Par ailleurs, le code obtenu pour l'implémentation du protocole est plus facile à faire évoluer car, dans ce cas, on modifie la table et non pas le programme et ceci permet d'obtenir une portabilité puisque l'addition d'un objet supplémentaire ne nécessite pas d'extension de ce code. Par conséquent, les utilisateurs peuvent facilement ajouter des objets en modifiant simplement la table.

La gestion d'un protocole de communication nécessite la gestion de tampons de communication qui servent à stocker les données numériques à transmettre ou à recevoir. La taille de ces tampons est incompatible avec les contraintes de taille de la mémoire vive si l'on veut utiliser un microcontrôleur de faible prix. Par exemple, si l'on veut transmettre une trame de 64 octets, il faut un réserver un tampon de cette taille.

Selon une variante de l'invention, on évite l'utilisation de tampons, ce qui est une gestion particulière avec le logiciel de l'application puisque le logiciel de communication doit signaler la réception de données à l'application avant d'avoir eu l'assurance de l'intégrité des données reçues par le contrôle de redondance cyclique qui n'est reçu qu'à la fin de la réception.

A cet effet, à la réception des octets d'une trame, la procédure logicielle d'interruption G1 traite les données à la volée, et les signale au logiciel d'application H lorsqu'il s'agit de données d'application.

Cette signalisation peut se faire par appel par la procédure logicielle d'interruption G1 d'une procédure de l'application (call-back). Ceci signifie que cette procédure s'exécute dans une routine d'interruption et doit donc respecter la contrainte des 416 microsecondes.

Selon une variante, la procédure iogicieiie d'interruption G1 met à jour un drapeau qui sera exploité par la procédure logicielle d'application G2, c'est-à-dire que la prochaine fois que l'application appelle la procédure logicielle d'application G2, celle-ci effectuera cette procédure de call-back.

A la réception du contrôle de redondance cyclique de la trame, si ce dernier est correct, la procédure logicielle d'interruption G1 signale que la trame est correcte et la signalisation s'effectue comme précédemment.

L'avantage de ce traitement à la volée est non seulement de permettre d'utiliser un microcontrôleur ne comportant que 128 octets de mémoire vivre, mais aussi de permettre d'avoir des trames de longueur quelconque.

## Revendications

1. Procédé de gestion des protocoles d'échange dans un dispositif électronique de communication entre un appareil électrique alimenté par un réseau d'énergie électrique et un système de communication par courant porteur sur ledit réseau d'énergie électrique, ledit dispositif comportant un microcontrôleur (16), comprenant une partie logicielle libre (H) réservée à une application de l'appareil, et un modem (14), procédé dans lequel on réalise, entre les interruptions engendrées par réception ou émission d'un bit, un contrôle de redondance cyclique (CRC) et une autocorrection des erreurs (FEC) sur des informations numériques transmises, **caractérisé en ce que** on utilise un microcontrôleur (16) de capacité mémoire réduite, dont une mémoire morte est inférieure ou égale à 8 kilo-octets, **en ce que** le contrôle de redondance cyclique (CRC) et l'autocorrection des erreurs (FEC) sont réalisés sous la commande d'un logiciel de gestion des protocoles (G) comportant une procédure d'interruptions (G1) et une procédure d'application (G2), **en ce que** le calcul de l'autocorrection des erreurs (FEC) en transmission et en réception est effectué en utilisant des tables de constantes dont la taille est toujours inférieure à 256 octets et **en ce que** le calcul du contrôle de redondance cyclique (CRC) est réalisé à chaque octet reçu en utilisant des tables dont la taille est toujours inférieure à 256 octets.

2. Procédé selon la revendication 1, **caractérisé en ce que** le calcul de l'autocorrection des erreurs et le calcul du contrôle de redondance cyclique sont réalisés séparément, chacun dans une interruption différente.

3. Procédé selon la revendication 1, **caractérisé en ce que**, en transmission, l'autocorrection des erreurs est réalisée par 6 bits calés à droite dans l'octet de résultat, **en ce que**, en réception, la trame comporte les 14 bits calés à droite et **en ce que**, en réception, on effectue une itération par bit reçu sans attendre la réception des 14 bits.

4. Procédé selon la revendication 1, **caractérisé en ce que** on utilise une table de 64 octets et une table de 4 octets encodant les chaînes d'autocorrection des erreurs de 0 à 63 et les chaînes d'autocorrection des erreurs de xx000000 où xx varie de 0 à 3 et on calcule les chaînes d'autocorrection des erreurs en deux parties.

5. Procédé selon la revendication 1, **caractérisé en ce que** on utilise deux tables de 16 octets encodant des chaînes d'autocorrection des erreurs de 0 à 15 puis de xxxx0000 où xxxx varie de 0 à 15 et **en ce que** on calcule les chaînes d'autocorrection des erreurs en deux parties.

6. Procédé selon la revendication 1, **caractérisé en ce que** le calcul du contrôle de redondance cyclique est effectué à chaque octet reçu en utilisant une table de 256 octets.

7. Procédé selon la revendication 1, **caractérisé en ce que** le calcul du contrôle de redondance cyclique est effectué à chaque octet reçu en utilisant parité, sans table.

8. Procédé selon la revendication 1, **caractérisé en ce que** le calcul du contrôle de redondance cyclique est effectué à chaque bit reçu, en réalisant un traitement bit à bit avec un octet de retard, sans table.

9. Procédé selon la revendication 1, **caractérisé en ce que** la gestion du protocole de communications est réalisée au moyen d'un langage orienté objet.

10. Procédé selon la revendication 1, **caractérisé en ce que** la gestion du protocole de communications est réalisée par le logiciel de gestion des protocoles (G) sans utiliser de tampons en traitant les données à la volée et en les signalant au logiciel de l'application (H).

11. Procédé selon la revendication 10, **caractérisé en ce que** signalisation est réalisée par appel direct d'une procédure de l'application (H) par procédure de communication (G1) pendant une routine d'interruption.

12. Procédé selon la revendication 10, **caractérisé en ce que** la signalisation est réalisée par mise à jour, par la procédure de communication (G1) d'un drapeau qui sera exploité par la procédure d'application (G2).

13. Procédé selon la revendication 1, **caractérisé en ce que** le microcontrôleur travaille à une cadence faible.

14. Microcontrôleur (16) destiné à être intégré dans un dispositif électronique de communication entre un appareil électrique alimenté par un réseau d'énergie électrique et un système de communication par courant porteur sur ledit réseau d'énergie électrique, **caractérisé en ce qu'**il comprend une mémoire morte dans laquelle est stocké un logiciel de gestion des protocoles d'échange réalisant un procédé selon l'une des revendications précédentes.

15. Microcontrôleur selon la revendication 14, **caractérisé en ce qu'**il est piloté par l'horloge (20) du modem (14) par l'intermédiaire d'un diviseur de fréquence (22).

## Patentansprüche

1. Verfahren zur Datenaustauschprotokollverwaltung in einer elektronischen Einrichtung zur Kommunikation zwischen einem elektrischen Gerät, das von einem Netz für elektrische Energie versorgt wird, und einem Kommunikationssystem durch einen Trägerstrom auf dem Netz für elektrische Energie, wobei die Einrichtung eine Mikrosteuerung (16), die einen für eine Anwendung des Geräts reservierten freien Softwareteil (H) umfasst, und ein Modem (14) aufweist, in welchem Verfahren zwischen den durch Empfang und Senden eines Bits erzeugten Unterbrechungen eine Steuerung mit zyklischer Redundanz (CRC) und eine automatische Fehlerkorrektur (FEC) an den übertragenen digitalen Informationen ausgeführt wird, **dadurch gekennzeichnet, dass** eine Mikrosteuerung (16) mit verringerter Speicherkapazität verwendet, deren Totspeicher kleiner oder gleich 8 kiloBytes ist, dass die Steuerung mit zyklischer Redundanz (CRC) und die automatische Fehlerkorrektur (FEC) unter Steuerung einer Software für die Verwaltung von Protokollen (G) ausgeführt werden, die eine Unterbrechungsprozedur (G1) und eine Anwendungsprozedur (G2) aufweist, dass die Berechung der automatischen Fehlerkorrektur (FEC) bei Übertragung und Empfang ausgeführt wird, indem Tabellen von Konstanten verwendet werden, deren Größe immer unter 256 Byte liegt, und dass die Berechnung der Steuerung mit zyklischer Redundanz (CRC) an jedem empfangenen Byte ausgeführt wird, indem Tabellen verwendet werden, deren Größe immer unter 256 Byte liegt.

2. Verfahren nach Anspruch 1, **dadurch gekennzeichnet, dass** die Berechung für die automatische Fehlerkorrektur und die Berechung für die Steuerung mit zyklischer Redundanz getrennt ausgeführt werden, jeweils in einer anderen Unterbrechung..

3. Verfahren nach Anspruch 1, **dadurch gekennzeichnet, dass** bei der Übertragung die automatische Fehlerkorrektur durch 6 Bits ausgeführt wird, die im Ergebnisbyte rechts festgesetzt sind, dass beim Empfang der Rahmen die rechts festgesetzten 14 Bits umfasst, und dass beim Empfang eine Iteration je empfangenes Bit ausgeführt wird, ohne den Empfang der 14 Bits abzuwarten.

4. Verfahren nach Anspruch 1, **dadurch gekennzeichnet, dass** eine Tabelle mit 64 Bytes und eine Tabelle mit 4 Bytes verwendet wird, die die Ketten für die automatische Fehlerkorrektur von 0 bis 63 und die Ketten für die automatische Fehlerkorrektur von xx000000 codieren, wobei xx von 0 bis 3 variiert, und die Ketten für die automatische Fehlerkorrektur in zwei Teilen berechnet werden.

5. Verfahren nach Anspruch 1, **dadurch gekennzeichnet, dass** zwei Tabellen mit 16 Bytes verwendet werden, die die Ketten für die automatische Fehlerkorrektur von 0 bis 15, dann von xxxx0000 codieren, worin xxxx von 0 bis 15 variiert, und dass die Ketten für die automatische Fehlerkorrektur in zwei Teilen berechnet wird.

6. Verfahren nach Anspruch 1, **dadurch gekennzeichnet, dass** die Berechnung für die Steuerung mit zyklischer Redundanz bei jedem empfangenen Byte ausgeführt wird, indem eine Tabelle mit 256 Bytes verwendet wird.

7. Verfahren nach Anspruch 1, **dadurch gekennzeichnet, dass** die Berechnung für die Steuerung mit zyklischer Redundanz bei jedem empfangenen Byte ausgeführt wird, indem die Parität, ohne Tabelle, verwendet wird.

8. Verfahren nach Anspruch 1, **dadurch gekennzeichnet, dass** die Berechnung für die Steuerung mit zyklischer Redundanz bei jedem empfangenen Byte ausgeführt wird, indem eine Verarbeitung Bit für Bit mit einem Verzögerungsbyte, ohne Tabelle, verwendet wird.

9. Verfahren nach Anspruch 1, **dadurch gekennzeichnet, dass** die Verwaltung des Kommunikationsprotokolls mittels einer objektorientierten Sprache ausgeführt wird.

10. Verfahren nach Anspruch 1, **dadurch gekennzeichnet, dass** die Verwaltung des Kommunikationsprotokolls durch die Software für die Verwaltung von Protokollen (G) ohne Verwendung von Puffern ausgeführt wird, indem die Daten sofort verarbeitet werden und indem sie der Anwendungssoftware (H) übermittelt werden.

11. Verfahren nach Anspruch 10, **dadurch gekennzeichnet, dass** die Übermittlung durch direkten Aufruf einer Anwendungsprozedur (H) durch die Kommunikationsprozedur (G1) während der Unterbrechungsroutine ausgeführt wird.

12. Verfahren nach Anspruch 10, **dadurch gekennzeichnet, dass** die Übermittlung durch Aktualisierung einer Marke durch die Kommunikationsprozedur ausgeführt wird, die von der Anwendungsprozedur (G2) ausgewertet wird.

13. Verfahren nach Anspruch 1, **dadurch gekennzeichnet, dass** die Mikrosteuerung mit geringer Leistung arbeitet.

14. Mikrosteuerung (16), die dafür vorgesehen ist, in eine elektronische Einrichtung zur Kommunikation zwischen einem elektrischen Gerät, das von einem Netz für elektrische Energie versorgt wird, und einem Kommunikationssystem durch einen Trägerstrom auf dem Netz für elektrische Energie integriert zu werden, **dadurch gekennzeichnet, dass** sie einen Totspeicher umfasst, in welchem eine Verwaltungssoftware für die Austauschprotokolle gespeichert ist, die ein Verfahren nach einem der vorhergehenden Ansprüche ausführt.

15. Mikrosteuerung nach Anspruch 14, **dadurch gekennzeichnet, dass** die durch den Taktgeber (20) des Modems (14) mittels eines Frequenzteilers (22) gesteuert wird.

## Claims

1. Method for managing exchange protocols in an electronic device for communication between an electrical apparatus supplied by an electric power system and a carrier current communication system in said electric power system, said device comprising a microcontroller (16), which comprises a free software unit (H) reserved for an application of the apparatus, and a modem (14), method in which a cyclic redundancy check (CRC) and a forward error correction (FEC) are carried out on transmitted digital information between the interruptions caused by reception or emission of a bit, **characterised in that** a microcontroller (16) having a reduced memory capacity, of which a read-only memory is smaller than or equal to 8 kilobytes, is used, **in that** the cyclic redundancy check (CRC) and the forward error correction (FEC) are carried out under the control of a protocol management software program (G) comprising an interruption procedure (G1) and an application procedure (G2), **in that** the calculation for the forward correction of transmission and reception errors (FEC) is carried out using constant tables, the size of which is always less than 256 bytes, and **in that** the calculation for the cyclic redundancy check (CRC) is carried out on each received byte using tables, the size of which is always less than 256 bytes.

2. Method according to claim 1, **characterised in that** the calculation for the forward error correction and the calculation for the cyclic redundancy check are carried out separately, each in a different interruption.

3. Method according to claim 1, **characterised in that**, in transmission, the forward error correction is carried out by 6 low-order bits in the result byte, **in that**, in reception, the frame comprises the 14 low-order bits and **in that**, in reception, an iteration by received bit is carried out without waiting for the reception of the 14 bits.

4. Method according to claim 1, **characterised in that** a table of 64 bytes and a table of 4 bytes encoding the forward error correction chains from 0 to 63 and the forward error correction chains of xx000000 are used, wherein xx varies from 0 to 3 and the forward error correction chains are calculated in two portions.

5. Method according to claim 1, **characterised in that** two tables of 16 bytes encoding forward error correction chains from 0 to 15, then of xxxx0000 are used, wherein xxxx varies from 0 to 15, and **in that** the forward error correction chains are calculated in two portions.

6. Method according to claim 1, **characterised in that** the calculation for the cyclic redundancy check is carried out on each received byte using a table of 256 bytes.

7. Method according to claim 1, **characterised in that** the calculation for the cyclic redundancy check is carried out on each received byte using parity, without a table.

8. Method according to claim 1, **characterised in that** the calculation for the cyclic redundancy check is carried out on each received bit by carrying out a bit-by-bit treatment with a delay byte, without a table.

9. Method according to claim 1, **characterised in that** the management of the communications protocol is carried out by means of an object-oriented language.

10. Method according to claim 1, **characterised in that** the management of the communications protocol is carried out by the protocol management software program (G) without using buffers, by processing the data in flight and by signalling said data to the software program of the application (H).

11. Method according to claim 10, **characterised in that** signalling is carried out by directly calling an application procedure (H) by means of a communication procedure (G1) during an interruption routine.

12. Method according to claim 10, **characterised in that** the signalling is carried out by updating, by means of the communication procedure (G1), a flag, which will be operated by means of the application procedure (G2).

13. Method according to claim 1, **characterised in that** the microcontroller operates at a low rate.

14. Microcontroller (16) intended to be integrated into an electronic device for communication between an electrical apparatus supplied by an electric power system and a carrier current communication system in said electric power system, **characterised in that** it comprises a read-only memory in which a software program for managing the exchange protocols carrying out a method according to any one of the preceding claims is stored.

15. Microcontroller according to claim 14, **characterised in that** it is controlled by the clock (20) of the modem (14) by means of a frequency divider (22).
